# EUROPÄISCHE PATENTSCHRIFT

(11) **EP 3 035 460 B1**
(45) Veröffentlichungstag und Bekanntmachung des Hinweises auf die Patenterteilung: **06.09.2017**
(21) Anmeldenummer: 14198601.8
(22) Anmeldetag: 17.12.2014
(51) Int. Cl.: H02G 1/12

(54) **Schneideinheit zum Abisolieren von Kabeln**
Cutting unit for stripping insulation from cables
Unité de coupe destinée à isoler des câbles

(43) Veröffentlichungstag der Anmeldung: 22.06.2016
(73) Patentinhaber: Komax Holding AG, 6036 Dierikon (CH)
(72) Erfinder: Viviroli, Stefan, 6048 Horw (CH)
(74) Vertreter: Inventio AG

(56) Entgegenhaltungen:
- WO-A1-2014/147596
- DE-U1-202011 107 872
- US-A- 2 956 717

## Beschreibung

Die Erfindung betrifft eine Schneideinheit zum Abisolieren von Kabeln in einer Abisolierstation beispielsweise einer Kabelbearbeitungsmaschine. Weiterhin betrifft die Erfindung ein Verfahren zum Herstellen einer derartigen Schneideinheit.

Beim Abisolieren wird ein Kabelmantel oder die Kabelisolation eines elektrischen Kabels mittels Abisoliermessern angeschnitten und der Kabelmantel mittels einer Abzugsbewegung abgezogen, so dass schliesslich ein Kabelende mit einem nackten Leiter vorliegt. Abisolierstationen sind seit längerer Zeit gebräuchlich und beispielsweise aus der EP 623 982 B1 oder EP 1 515 410 B1 bekannt geworden. Diese Abisolierstationen verfügen über einen Messerkopf mit oberen und unteren Schneideinheiten mit paarweise angeordneten Messern, die gegeneinander bewegbar sind. Die Schneideinheiten weisen Trennmesser zum Durchtrennen des Kabels auf. Die durch den Trennvorgang erhaltenen zwei Kabelenden werden danach simultan mittels vorderen und hinteren Abisoliermessern des Messerkopfs zum Abisolieren des nacheilenden und voreilenden Kabelendes abisoliert. DE 20 2011 107872 U offenbart eine Schneideinheit zum Abisolieren von Kabeln nach dem Oberbegriff des Anspruchs 1. Während des Abisolierprozesses sollte der Leiter des Kabels vom Messer nicht beschädigt werden. Eine Beschädigung kann schon dann vorliegen, wenn der Leiter vom Abisoliermesser berührt wurde. Aufgrund von stetig steigenden Qualitätsanforderungen bei maschinell durchgeführten Abisolierprozessen besteht die Notwendigkeit, diesen Abisolierprozess zu überwachen. Daher weisen moderne Abisolierstationen Detektiereinrichtungen zum Ermitteln von Leitberührungen durch die Abisoliermesser aufweisen. Eine derartige Überwachungsanordnung ist beispielsweise aus der WO 2012/015062 A1 bekannt geworden. Zum Durchführen des Verfahrens mit dieser Überwachungsanordnung ist es notwendig, die Abisoliermesser elektrisch zu isolieren, damit eine Leiterdetektion möglich ist. Hierzu werden in der Praxis Isolationsteile aus Keramik verwendet, die zwischen den Abisoliermessern und einem Grundkörper verbaut sind.

Es ist deshalb eine Aufgabe der vorliegenden Erfindung, die Nachteile des Bekannten zu vermeiden und insbesondere eine Schneideinheit der eingangs genannten Art zu schaffen, die einfach herstellbar ist.

Erfindungsgemäss wird diese Aufgabe mit der Schneideinheit mit den Merkmalen des Anspruchs 1 gelöst. Die Schneideinheit zum Abisolieren von Kabeln in einer Abisolierstation beispielsweise einer Kabelbearbeitungsmaschine, umfasst einen Grundkörper, der an die Abisolierstation andockbar oder angedockt sein kann. Der Grundkörper kann ein einstückiger, monolithisch ausgebildeter Formkörper, aus einem metallischen Material, wie etwa Stahl, sein. Weiter umfasst die Schneideinheit wenigstens ein Abisoliermesser. Dadurch, dass das erwähnte wenigstens eine Abisoliermesser durch einen Kleb- oder Dichtstoff vom Grundkörper elektrisch getrennt ist, kann die Schneideinheit einfach und mit geringen Herstellkosten hergestellt werden. Dank des Kleb- oder Dichtstoffs ergibt sich eine sichere und langlebige direkte oder indirekte Befestigung des Abisoliermessers an den Grundkörper. Der Kleb- oder Dichtstoff gewährleistet darüber hinaus die gewünschte elektrische Trennung zwischen Grundkörper und Abisoliermesser.

Das vorgenannte Abisoliermesser kann direkt mittels des Kleb- oder Dichtstoffes an den Grundkörper geklebt werden. Besonders vorteilhaft ist es jedoch, wenn die Schneideinheit wenigstens einen an den Grundkörper befestigten oder befestigbaren Messerhalter zum Halten des wenigstens einen Abisoliermessers aufweist. Dank der Messerhalter ergeben sich breitere Anwendungsmöglichkeiten für die Schneideinheit.

Der Kleb- oder Dichtstoff kann zwischen Abisoliermesser und Messerhalter oder zwischen Messerhalter und Grundkörper oder allenfalls sogar sowohl zwischen Abisoliermesser und Messerhalter als auch zwischen Messerhalter und Grundkörper angeordnet sein. Besonders vorteilhaft ist es jedoch, wenn nur der Messerhalter am Grundkörper mittels des Kleb- oder Dichtstoffes am Grundkörper festgeklebt ist.

Der Kleb- oder Dichtstoff kann ein Epoxidharz-Klebstoff sein. Neben der elektrischen Isolationswirkung zeichnet sich dieser Klebstoff durch eine hohe Festigkeit und einfache Verarbeitbarkeit aus. Als Kleb- oder Dichtstoff kommen aber auch andere hochfeste Klebstoffe in Frage, die eine sichere, langlebige und präzise Positionierung der Abisoliermesser in der Schneideinheit gewährleisten.

Vorteilhaft kann es sein, wenn das Abisoliermesser über eine lösbare Verbindung am Messerhalter befestigt ist. Somit können Abisoliermesser mit abgenutzten Schneiden einfach ausgewechselt werden.

Für eine einfache Montage und Demontage ist das Abisoliermesser besonders vorteilhaft am Messerhalter angeschraubt. Die Schraubverbindung ist dabei vorteilhaft derart ausgestaltet, dass die Schraube zum Befestigen des Abisoliermessers an den Messerhalter nur im Messerhalter aufgenommen ist und nicht bis zum Grundkörper reicht. Auf diese Weise kann sichergestellt werden, dass keine unerwünschte elektrische Verbindung zwischen Abisoliermesser und Grundkörper geschaffen wird.

Der Grundkörper kann eine Aussparung zur Aufnahme des Messerhalters aufweisen. Die Aussparung kann dabei vorzugsweise komplementär zum wenigstens einen Abisoliermesser ausgestaltet sein, wodurch eine besonders präzise und lagemässig sichere Positionierung des Abisoliermessers am oder im Messerhalter ermöglicht wird.

Die vorerwähnte Aussparung kann bevorzugt taschenförmig ausgestaltet sein, was eine einfache Anbringung des Messerhalters an den Grundkörper möglich macht. Vor allem für vergleichsweise schnell aushärtende Klebstoffe ist eine einfache und positionsgenaue Anbringung wichtig. Mit einer solchen Ausgestaltung können die jeweiligen Arbeitsschritte zum Zusammenbauen der Schneideinheit maschinell durchgeführt werden.

Auch die Abisoliermesser können in eine Messeraufnahme zur Aufnahme des wenigstens einen Abisoliermessers angeordnet sein. Diese Messaufnahme kann taschenförmig ausgestaltet sein. Die Messaufnahme kann beispielsweise derart ausgestaltet sein, dass das Abisoliermesser jeweils in die Messeraufnahme einschiebbar und so das oder die Abisoliermesser quer zur Einschieberichtung gesichert sind.

Für einfachere Maschinenvarianten kann der Grundkörper nur einen Messerhalter umfassen. Vorteilhaft kann der Grundkörper zwei Messerhalter umfassen, wobei ein erster bzw. vorderer Messerhalter an einer Seite des Grundkörpers und ein zweiter bzw. hinterer Messerhalter an einer gegenüberliegenden Seite des Grundkörpers angeordnet sein kann. Dabei kann an jedem Messerhalter wenigstens ein Abisoliermesser befestigt sein. Besonders bevorzugt können an jedem Messerhalter je zwei Abisoliermesser befestigt sein, wobei die zwei Abisoliermesser nebeneinander liegend angeordnet sein können. Die Abisoliermesser können jeweils V-förmige Schneiden aufweisen.

In einer weiteren Ausführungsform weist die Schneideinheit vordere und hintere Abisoliermesser zum Abisolieren eines nacheilenden und voreilenden Kabelendes und ein zwischen dem vorderen und hinteren Abisoliermesser angeordnetes Trennmesser auf. Dabei können die vorderen und hinteren Abisoliermesser an gegenüberliegenden Aussenseiten des Grundkörpers und das Trennmesser mittig am Grundkörper angeordnet sein. Je Vorder- bzw. Rückseite können direkt oder indirekt über den vorgängig beschriebenen Messerhalter je ein Abisoliermesser, zwei nebeneinander oder eine Vielzahl von Abisoliermessern am Grundkörper angebracht sein.

Die Schneideinheit kann elektrische Anschlüsse oder Schnittstellen zum Auslesen von elektrischen Signalen zum Ermitteln von Leiterberührungen aufweisen. Die elektrische Anschlüsse oder Schnittstellen können dabei am Grundkörper angeordnet oder zugeordnet sein. Sofern die Schneideinheit Messerhalter zur Aufnahme des Abisoliermessers aufweist, ist es vorteilhaft, wenn die elektrischen Anschlüsse oder Schnittstellen dem Messerhalter zugeordnet sind.

Besonders vorteilhaft kann es sein, wenn die Schneideinheit eine Printplatte aufweist, die mit dem Messerhalter elektrisch verbunden ist. Die elektrische Verbindung kann beispielsweise mittels einer Kontaktierschraube sichergestellt werden, die die Printplatte mit dem Messerhalter elektrisch verbindet. Die Printplatte kann als einseitige Leiterplatte ausgeführt sein, wobei die Leiterbahnen auf der dem Grundkörper abgewandten Seite angeordnet sind.

Ein weiterer Aspekt der Erfindung ist auf eine Abisolierstation zum Abisolieren von Kabeln gerichtet. Die Abisolierstation weist einen Messerkopf mit wenigstens einer oberen Schneideinheit und einer unteren Schneideinheit auf, wobei bevorzugt beide Schneideinheiten, d. h. die obere und die untere Schneideinheit, wie vorgängig beschrieben ausgestaltet sind. Weiter weist die Abisolierstation eine Überwachungsanordnung zum Feststellen von Leiterkontakten mit induktiver oder kapazitiver Funktionsweise auf. Derartige Überwachungsanordnungen sind beispielhaft aus der WO 2014/060218 A1, WO 2012/015062 A1 oder aus der DE 10 2007 053 825 A1 bekannt geworden.

Schliesslich betrifft die Erfindung ein Verfahren zum Herstellen einer Schneideinheit für eine Abisolierstation zum Abisolieren von Kabeln. Das Verfahren zeichnet sich dadurch aus, dass wenigstens ein Abisoliermesser direkt oder über einen Messerhalter zum Halten des Abisoliermessers durch Kleben an einen Grundkörper befestigt oder mit dem Grundkörper verbunden wird.

Ein vorteilhaftes Verfahren kann sich ergeben, wenn Messerhalter zum Halten der Abisoliermesser mit Übermass gefertigt werden, ein oder mehrere solche Messerhalter an den Grundkörper geklebt werden und nach dem Klebevorgang der oder die Messerhalter auf das gewünschte Mass gefertigt werden.

Besonders vorteilhaft werden für die Bildung eines Schneideinheit-Paars aus oberer Schneideeinheit und unterer Schneideinheit zwei Grundkörper mit jeweils daran angeklebten Messerhaltern bereitgestellt, wobei die Messerhalter der zwei Grundkörper in einem gemeinsamen Fertigungsschritt auf das gewünschte Mass gebracht werden. Besonders vorteilhaft werden die jeweiligen Abisoliermesser erst nach Beendigung des erwähnten Fertigungsschritts, bei dem die Messerhalter auf das gewünschte Mass gebracht werden, an die fertiggestellten Messerhalter, beispielsweise durch Anschrauben, befestigt.

Weitere Einzelmerkmale und Vorteile ergeben sich aus der nachfolgenden Beschreibung eines Ausführungsbeispiels und aus den Zeichnungen. Es zeigen:
- Figur 1:: eine perspektivische Darstellung einer Abisolierstation,
- Figur 2:: eine perspektivische Darstellung einer erfindungsgemässen Schneideinheit für eine Abisolierstation,
- Figur 3:: die Schneideinheit aus Figur 2 in einer teilweisen Explosionsdarstellung, und
- Figur 4:: eine perspektivische Darstellung mit einem Teilschnitt der Schneideinheit.

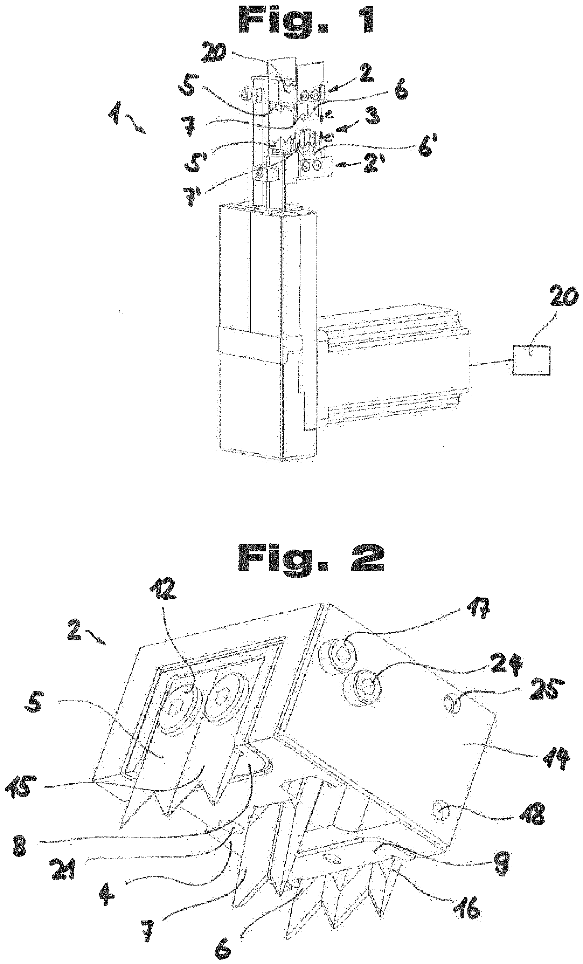

Figur 1 zeigt eine insgesamt mit 1 bezeichnete Abisolierstation zum Abisolieren von (nicht dargestellten) Kabeln. Die Abisolierstation 1 umfasst einen Messerkopf 3 mit einer oberen Schneideinheit 2 und einer unteren Schneideinheit 2'. Die obere und untere Schneideinheit 2 und 2' sind mittels eines Antriebs gegeneinander bewegbar. Die Zustellbewegungen der Schneideinheiten 2, 2' sind mit Pfeilen e, e' angedeutet. Derartige Abisolierstationen 1 sind - bis auf die nachfolgend in den Figuren 2 bis 4 im Detail beschriebenen Schneideinheiten 2, 2' - an sich seit längerer Zeit bekannt und gebräuchlich. Die Linearbewegung für die Schneideinheiten 2, 2' können beispielsweise - wie in der EP 623 982 B1 beschrieben - über Zahnstangen gegeneinander bewegt werden. Eine weitere Abisolierstation ist zum Beispiel aus der EP 1 515 410 B1 bekannt geworden. Die Rotationsbewegung des Antriebsmotors gemäss letztgenannter Schrift wird mittels einer Lineareinheit in die Linearbewegung zum Bewegen der oberen und unteren Schneideeinheit 2, 2' umgesetzt. Der Messerkopf 2 weist folgende drei paarweise angeordnete Messer auf: ein vorderes Abisoliermesserpaar 5, 5', ein hinteres Abisoliermesserpaar 6, 6' sowie ein Trennmesserpaar 7, 7'. Mit den Trennmessern 7 und 7' kann ein Kabel abgelängt werden. Danach können die durch den Trennvorgang entstandenen Kabelenden simultan mit den Abisoliermessern 5 und 5'und den Abisoliermessern 6, 6' abisoliert werden. Die Abisoliermesser 5, 5' und 6, 6' sind im vorliegenden Ausführungsbeispiel ersichtlicherweise gegenüber den Trennmessern 7, 7' verkürzt, so dass während eines ersten Teils des Arbeitshubes des Antriebs für den Messerkopf nur das Kabel getrennt wird. Danach zieht ein (nicht dargestellter) Abzugsantrieb die Kabelenden von der Trennstelle auf die gewünschte Abisolierlänge zurück, worauf während eines zweiten Teils des Arbeitshubs des Messerantriebs die Isolation des elektrischen Kabels eingeschnitten wird. Danach können die eingeschnittenen Isolationshüllen abgezogen werden.

Beim Einschneiden mit Abisoliermessern soll in der Regel die Einschnitttiefe derart sein, dass die Isolation möglichst tief eingeschnitten wird, jedoch ohne eine Kerbe auf einer oder mehreren, aus beispielsweise einem Kupfermaterial oder aus Aluminium bestehenden, Litzen des Leiters zu verursachen. Beim Abziehen wird die Einschnitttiefe häufig etwas reduziert, damit die Abisoliermesser nicht über die Litzen kratzen. Denn eine Berührung des Kabels beim Abziehen könnte zur Folge haben, dass die abisolierten Kabel nicht mehr weiterverwendet werden können und Ausschuss darstellen. Beispielsweise können bei einem nachfolgenden Crimpen Probleme mit derart beschädigten Kabeln auftreten. Eine Berührung des Kabels beim Abziehen könnte zur Folge haben, dass durch die Reduzierung der Kupfermasse das Litzenpacket beispielsweise bei einem nachfolgenden Crimpen nicht mehr genügend verdichtet werden kann oder dass vorgezogene Litzen Kurzschlüsse mit anderen elektrischen Bauteilen verursachen. Kerben können weiter dazu führen, dass Litzen beim Crimpen oder erst später durch mechanische Belastungen brechen und somit der leitende Querschnitt und die mechanische Festigkeit der Verbindung reduziert wird. Daher weist die Abisolierstation 1 eine Überwachungsanordnung 20 zum Feststellen von Leiterkontakten auf. Eine solche Überwachungsanordnung ist in Figur 1 symbolisch dargestellt und mit "20" bezeichnet. Die Überwachungsanordnung 20 verfügt über eine induktive oder kapazitive Funktionsweise. Technische Einzelheiten zu derartigen Überwachungsanordnungen 20 sind beispielsweise aus der WO 2014/060218 A1, WO 2012/015062 A1 oder aus der DE 10 2007 053 825 A1 entnehmbar. Die WO 2012/015062 A1 beschreibt etwa ein Verfahren zum Detektieren einer Berührung eines Leiters durch Abisoliermesser, bei welchen ein Schaltkreis eine Impedanz misst. Wenn sich die Impedanz während des Abziehprozesses ändert, weil das Abisoliermesser den Leiter berührt, wird dies als Fehlermeldung angezeigt. Für das Detektionsverfahren mit den erwähnten Überwachungsanordnungen mit induktiver oder kapazitiver Funktionsweise ist es notwendig, die Abisoliermesser elektrisch zu isolieren. Der Messerkopf 3 der Abisolierstation 1 weist hierzu Schneideinheiten 2, 2' auf, bei denen die Abisoliermesser 5, 5' und 6, 6' jeweils durch einen Kleb- oder Dichtstoff vom zugehörigen Grundkörper 4 elektrisch getrennt sind. Details zu dieser vorteilhaften Ausgestaltung der elektrischen Isolation der Abisoliermesser ist in den nachfolgenden Figuren 2 bis 4 im Detail gezeigt.

Figur 2 zeigt eine Schneideinheit 2 für eine Abisolierstation zum Abisolieren von Kabeln. Die Schneideinheit 2 umfasst einen Grundkörper 4, der mit vorderen Abisoliermessern 5, 15, hinteren Abisoliermessern 6, 16 sowie mittig dazwischen angeordneten Trennmesser 7 bestückt ist. Mit dem Trennmesser 7 kann ein Kabel abgelängt werden. Danach können die durch diesen Trennvorgang entstandenen Kabelenden simultan abisoliert werden. Die vorderen Abisoliermesser 5, 15 dienen dabei zum Abisolieren eines nacheilenden Kabelendes; die hinteren Abisoliermesser 6, 16 dienen zum Abisolieren eines voreilenden Kabelendes. Der Grundkörper ist an die Abisolierstation andockbar. Hierzu weist der Grundkörper 4 Bohrungen 21 auf, in die Befestigungsschrauben zum Befestigen der Schneideinheit 2 an die Abisolierstation 1. An einander gegenüberliegenden Aussenseiten des Grundkörpers 5 befinden sich die Abisoliermesser 5, 15 sowie 6, 16. Je Aussenseite sind jeweils zwei nebeneinander angeordnete Abisoliermesser 5, 15 bzw. 6, 16 vorgesehen. Auf einer Seite sind dies die Abisoliermesser 5 und 15 und auf der gegenüberliegenden Seite die Abisoliermesser 6 und 16. Zwischen den Abisoliermessern 5, 15 bzw. 6, 16 und dem Grundkörper sind Messerhalter 8 bzw. 9 angeordnet. Diese Messerhalter 8, 9 sind am Grundkörper mittels eines elektrisch isolierenden Kleb- oder Dichtstoffes an den Grundkörper 4 befestigt. Die Abisoliermesser sind mittels Schrauben 12 an den Messerhaltern 8, 9 befestigt, wobei die Befestigung derart ist, dass keine Kontaktierung des Grundkörpers 4 durch die Schrauben 12 erfolgt. Damit sind die Abisoliermesser ersichtlicherweise durch den Kleb- oder Dichtstoff vom Grundkörper 4elektrisch getrennt. Anstatt der hier gezeigten Maschinenvariante mit vorderen und hinteren Abisoliermessern sowie separaten Trennmessern ist die beschriebene Lösung zum elektrischen Trennen der Abisoliermesser vom Grundkörper selbstverständlich auch für einfachere Maschinen vorteilhaft und einsetzbar. Bei einfacheren Kabelbearbeitungsmaschinen ist zum Beispiel nur ein Satz Abisoliermesser vorhanden; die Funktion der Trennmesser kann durch die Abisoliermesser übernommen werden.

Zum Auslesen von elektrischen Signalen zum Ermitteln von Leiterberührungen sind elektrische Anschlüsse vorgesehen. Hierzu ist an einer Querseite des Grundkörpers 4 eine Printplatte 14 angeordnet, die mit der Überwachungseinheit 20 in Verbindung steht. Die Printplatte 14 ist mit den Messerhaltern 8, 9 elektrisch verbunden. Zum Befestigen der Printplatte 14 dienen Schrauben 17 und 24. Die äusseren Schrauben 17 erstrecken sich jeweils bis zu den Messerhaltern 8 bzw. 9, wodurch ein elektrischer Kontakt zwischen Printplatte und Messerhalter hergestellt wird. Diese Schrauben werden nachfolgend daher auch als "Kontaktierschrauben" bezeichnet. In Figur 2 ist im linken Bereich der Printplatte 14 eine Aufnahmeöffnung 18 für die Kontaktierschraube 17 erkennbar, die dem Messerhalter 9 zugeordnet ist. Die zwei Schrauben 24 dienen zum Befestigen der Printplatte 14 an den Grundkörper 4. Die Schrauben 24 werden daher nachfolgend auch als "Befestigungsschrauben" bezeichnet. Die zweite Befestigungsschraube ist jedoch in Figur 2 nicht dargestellt, wodurch die zugehörige Aufnahmeöffnung 25 erkennbar ist.

Der Grundkörper ist vorliegend ein einstückiger, monolithisch ausgebildeter Formkörper. Dieser Grundkörper 4 ist aus einem metallischen Werkstoff, beispielsweise aus Stahl, gefertigt. Der Grundkörper 4 kann mittels spanabhebenden Verfahren einfach hergestellt werden. Ebenso besteht der Messerhalter 8, 9 aus einem metallischen Werkstoff, besonders vorteilhaft aus demselben Material wie der Grundkörper 4. Der Messerhalter 8 bzw. 9 lässt sich ebenfalls einfach mit einem spanabhebenden Verfahren herstellen.

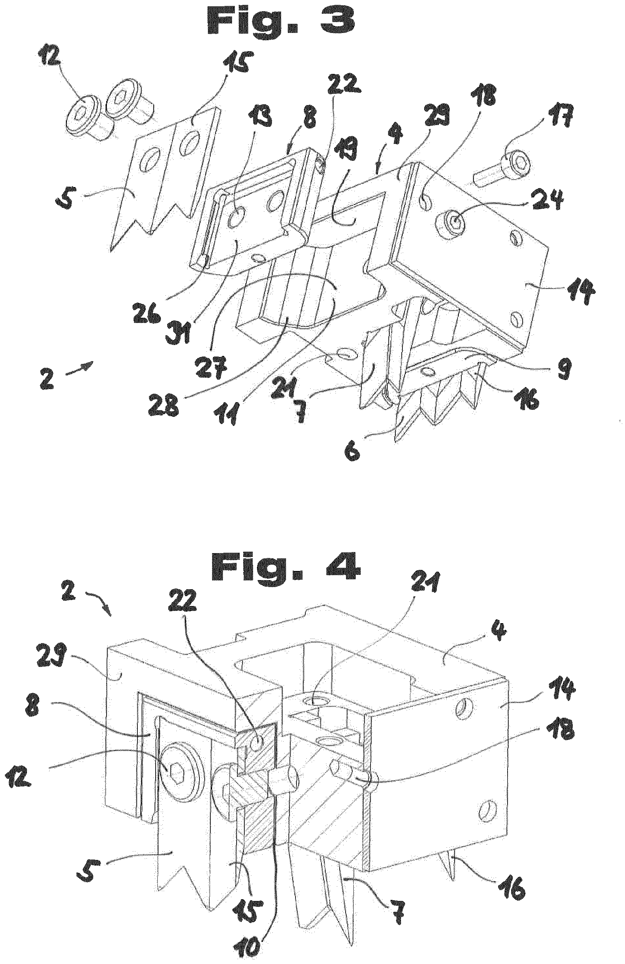

Weitere Details zur Schneideinheit 2 können aus den Figuren 3 und 4 entnommen werden. Aus Figur 3 ist entnehmbar, dass der Grundkörper 4 eine taschenförmige Aussparung 11 zur Aufnahme des Messerhalters 8 aufweist. Die Aussparung 11 weist eine zu einem Aufnahmeboden 27 rechtwinklig verlaufende Stirnfläche 19 auf, die einen Anschlag nach oben hin bildet. Seitlich am Aufnahmeboden 27 schliessen Seitenwandabschnitte 28 an, die den Übergang zwischen Aufnahmeboden 27 und Aussenseite 29 des Grundkörpers 4 bilden. Die taschenförmige Aussparung 11 weist ersichtlicherweise die Form einer Wanne mit durch die Abschnitte 28 gebildeten abgerundeten Wannenseiten auf. Der Messerhalter 8 ist komplementär zur taschenförmigen Aussparung 11 ausgebildet und lässt sich formschlüssig in die Aussparung 11 einsetzen. Die spezielle Formgebung von Aussparung 11 und Messerhalter 8 ermöglicht ein einfaches und sicheres Verkleben.

Die Abisoliermesser 5, 15 sind in einer Messeraufnahme 31 zur Aufnahme der beiden unmittelbar nebeneinander angeordneten Abisoliermessers 5, 15 aufgenommen. Diese Messeraufnahme 31 ist als taschenförmig Aussparung ausgestaltet, in die die Abisoliermesser 5, 15 von unten her einschiebbar sind. Die Messeraufnahme 31 weist seitlich angeordnete, sich in Einschieberichtung erstreckende Hinterschneidungen 31 auf, die eine Führung der Abisoliermesser beim Einschieben gewährleisten. Die so eingesetzten Abisoliermesser 5, 15 sind somit mittels der Hinterschneidungen 31 quer zur Einschieberichtung lagemässig gesichert.

Seitlich am Messerhalter 8 ist ein Gewindeloch 22 angeordnet, in das die Kontaktierschraube 17 eingeschraubt werden kann. Die zugehörige Schraubenaufnahme ist das mit 18 bezeichnete Rundloch in der Printplatte 14.

Wie aus Figur 4 entnehmbar ist, erstrecken sich die Schrauben 12 ersichtlicherweise nur bis in den Messerhalter 8. Der Gewindeabschnitt der Schraube 12 endet mit anderen Worten vor der Schnittstelle zwischen Grundkörper 4 und Messerhalter 8. Die Schrauben 12 verfügen beispielhaft über einen flachen Schraubenkopf mit einem Innensechskant. Die Abisoliermesser 5, 15 sind somit über eine lösbare Verbindung am Messerhalter 8 befestigt. Somit können Abisoliermesser mit abgenutzten Schneiden einfach ausgewechselt werden.

In Figur 4 ist die Verbindungsschicht aus dem isolierenden Klebstoff zwischen Messerhalter 8 und Grundkörper 4 durch Einfärben angedeutet und mit 10 bezeichnet. Der Klebstoff 10 ist bevorzugt ein Epoxidharz-Klebstoff, der sich durch eine hohe Festigkeit und einfache Verarbeitbarkeit auszeichnet. Da die Abisoliermesser 5, 6, 15, 16 durch den Epoxidharz-Klebstoff 10 vom Grundkörper 4 elektrisch getrennt ist, kann die Schneideinheit 2 einfach und mit geringen Herstellkosten hergestellt werden. Der Epoxidharz-Klebstoff gewährleistet eine sichere und langlebige indirekte Befestigung der Abisoliermesser 5,6, 15, 16 an den Grundkörper 4. Alternativ zur hier gezeigten Schneideinheit 2 mit an den Grundkörper befestigten Messerhaltern 8, 9 zum Halten der Abisoliermesser 5, 6, 15, 16 wäre es für spezielle Anwendungsgebiete auch vorstellbar, die Abisoliermesser direkt mittels des Kleb- oder Dichtstoffes an den Grundkörper zu kleben. Die Klebverbindung hat weiter folgende Vorteile: Die Herstellkosten sind tief. Weiter muss das Material für den Messerhalter 8, 9 ein nicht elektrisch isolierendes Material sein. Daher kann an sich das Material für den Messerhalter 8, 9 frei gewählt werden. Die mechanischen Eigenschaften und die Bearbeitbarkeit können so optimiert werden. Ein weiterer Vorteil besteht sodann in der sehr guten Montagefreundlichkeit, da, ausser den zu wechselnden Abisoliermessern 5, 6, 15, 16, keine losen Bauteile vorhanden sind. Auch die Printplatte 14 kann zum Beispiel beim Austauschen der Abisoliermesser 5, 6, 15, 16 am Messerhalter 8, 9 verbleiben.

Sowohl die Abisoliermesser 5, 6, 15, 16 als auch die Trennmesser 7 weisen im in den Figuren gezeigten Ausführungsbeispiel V-förmige Schneiden auf. Selbstverständlich könnten die Abisoliermesser aber auch gerade Schneiden bzw. Schneidkanten oder andere Schneidgeometrie (z.B. mit einer Krümmung) aufweisen.

Zum Herstellen der Schneideinheit 2 für die Abisolierstation 1 zum Abisolieren von Kabeln werden die Abisoliermesser 5, 15 bzw. 6, 16 direkt oder - wie vorgängig anhand des Ausführungsbeispiels beschrieben - über einen Messerhalter 8 bzw. 9 zum Halten der Abisoliermesser 5, 15 bzw. 6, 16 durch Kleben mit dem Grundkörper verbunden. In verfahrensmässiger Hinsicht kann es vorteilhaft sein, wenn zum Halten der Abisoliermesser 5, 15 bzw. 6, 16 der jeweilige Messerhalter 8 bzw. 9 mit Übermass gefertigt wird, diese Messerhalter 8, 9 an den Grundkörper 4 geklebt werden und nach dem Klebevorgang die Messerhalter 8, 9 auf das gewünschte Mass gefertigt werden. Besonders vorteilhaft wird für die Bildung eines Schneideinheit-Paars aus oberer Schneideeinheit und unterer Schneideinheit zwei Grundkörper mit jeweils daran angeklebten Messerhaltern bereitgestellt, wobei die Messerhalter der zwei Grundkörper in einem gemeinsamen Fertigungsschritt auf das gewünschte Mass gebracht werden. So ist es möglich, die für einen einwandfreien Abisolierprozess entscheidenden Toleranzen sehr klein zu halten und gleichzeitig die Herstellkosten zu optimieren. Besonders vorteilhaft werden die jeweiligen Abisoliermesser 5, 15 bzw. 6, 16 erst nach Beendigung des Fertigungsschritts, bei dem die Messerhalter 8, 9 auf das gewünschte Mass gebracht werden, an die fertiggestellten Messerhalter 8, 9 durch Anschrauben befestigt. Die Positioniergenauigkeit der Abisoliermesser 5, 15; 6, 16 erfüllt mit einer derartigen Anordnungen höchste Anforderungen. Alternativ könnten die Messerhalter 8, 9 auf das Fertigmass bearbeitet werden und dann masshaltig im Grundkörper 4 einzukleben.

## Patentansprüche

1. Schneideinheit (2, 2') zum Abisolieren von Kabeln in einer Abisolierstation (1), die Schneideinheit (2, 2') umfassend:
- einen Grundkörper (4) aus einem metallischen Material,
- wenigstens ein Abisoliermesser (5, 15; 6, 16),
- einen an den Grundkörper (4) befestigten oder befestigbaren Messerhalter (8, 9) zum Halten des wenigstens einen Abisoliermessers (5, 15; 6, 16)
**dadurch gekennzeichnet, dass** das Abisoliermesser (5, 15; 6, 16) durch einen Kleb- oder Dichtstoff (10) vom Grundkörper (4) elektrisch getrennt ist, wobei der Messerhalter (8, 9) aus einem metallischen Material besteht und wobei der Messerhalter (8, 9) am Grundkörper (4) mittels des Kleb- oder Dichtstoffs (10) festgeklebt ist.

2. Schneideinheit (2, 2') nach Anspruch 1, **dadurch gekennzeichnet, dass** der Kleb- oder Dichtstoff (10) ein Epoxidharz-Klebstoff ist.

3. Schneideinheit (2, 2') nach Anspruch 1 oder 2, **dadurch gekennzeichnet, dass** das Abisoliermesser (5, 15; 6, 16) über eine lösbare Verbindung am Messerhalter (8, 9) befestigt ist.

4. Schneideinheit (2, 2') nach Anspruch 3, **dadurch gekennzeichnet, dass** das Abisoliermesser (5, 15; 6, 16) am Messerhalter (8, 9) angeschraubt ist.

5. Schneideinheit (2, 2') nach einem der Ansprüche 1 bis 4, **dadurch gekennzeichnet, dass** der Grundkörper (4) eine Aussparung (11) zur Aufnahme des Messerhalters (8, 9) aufweist.

6. Schneideinheit (2, 2') nach Anspruch 5, **dadurch gekennzeichnet, dass** die Aussparung (11) zur Aufnahme des Messerhalters (8, 9) taschenförmig ausgestaltet ist.

7. Schneideinheit (2, 2') nach einem der Ansprüche 1 bis 6, **dadurch gekennzeichnet, dass** die Schneideinheit vordere und hintere Abisoliermesser (5, 15; 6, 16) zum Abisolieren eines nacheilenden und voreilenden Kabelendes und ein zwischen den vorderen und hinteren Abisoliermesser (5, 15; 6, 16) angeordnetes Trennmesser (7) aufweist, wobei vorderen und hinteren Abisoliermesser (5, 15; 6, 16) an gegenüberliegenden Aussenseiten des Grundkörpers (4) und das Trennmesser (7) mittig am Grundkörper (4) angeordnet sind.

8. Schneideinheit (2, 2') nach einem der Ansprüche 1 bis 7, **dadurch gekennzeichnet, dass** die Schneideinheit (2, 2') elektrische Anschlüsse (17, 18) zum Auslesen von elektrischen Signalen zum Ermitteln von Leiterberührungen aufweist.

9. Schneideinheit (2, 2') nach einem der Ansprüche 1 bis 8, **dadurch gekennzeichnet, dass** die Schneideinheit (2, 2') eine Printplatte (14) aufweist, die mit dem Messerhalter (8, 9) elektrisch verbunden ist.

10. Abisolierstation (1) zum Abisolieren von Kabeln mit einem Messerkopf () mit einer oberen Schneideinheit (2) und einer unteren Schneideinheit (2'), wobei wenigstens eine der und vorzugsweise die obere und untere Schneideinheit (2, 2') gemäss einem der Ansprüche 1 bis 9 ausgestaltet ist oder sind, und mit einer Überwachungsanordnung (20) zum Feststellen von Leiterkontakten mit induktiver oder kapazitiver Funktionsweise.

11. Verfahren zum Herstellen einer Schneideinheit (2, 2') für eine Abisolierstation (1) zum Abisolieren von Kabeln, insbesondere zum Herstellen einer Schneideineit (2, 2') nach einem der Ansprüche 1 bis 9, **dadurch gekennzeichnet, dass** wenigstens ein Abisoliermesser (5, 15; 6, 16) direkt oder über einen metallischen Messerhalter (8, 9) zum Halten des Abisoliermessers (5, 15; 6, 16) durch Kleben zum Schaffen einer elektrischen Trennung mit einem metallischen Grundkörper (4) verbunden ist.

12. Verfahren nach Anspruch 11, **dadurch gekennzeichnet, dass** zum Halten des Abisoliermessers (5, 15; 6, 16) Messerhalter (8, 9) mit Übermass gefertigt werden, ein oder mehrere Messerhalter (8, 9) an den Grundkörper (4) geklebt werden und nach dem Klebvorgang der oder die Messerhalter (8, 9) auf das gewünschte Mass gefertigt werden.

13. Verfahren nach Anspruch 12, **dadurch gekennzeichnet, dass** für die Bildung eines Schneideinheit-Paars aus oberer Schneideinheit (2) und unterer Schneideinheit (2') zwei Grundkörper (4) mit jeweils daran angeklebten Messerhaltern (8, 9) bereitgestellt werden und die Messerhalter (8, 9) der zwei Grundkörper (4) in einem gemeinsamen Fertigungsschritt auf das gewünschte Mass gebracht werden.

## Claims

1. A cutting unit (2, 2') for stripping cables in a stripping station (1), the cutting unit (2, 2') comprising:
- a base body (4) from a metallic material,
- at least one stripping knife (5, 15; 6, 16)
- a knife holder (8, 9) secured or securable on the base body (4) for holding the at least one stripping knife (5, 15; 6, 16),
**characterized in that** the stripping knife (5, 15; 6, 16) is electrically separated from the base body (4) by an adhesive or sealant (10), wherein the knife holder (8, 9) is made from a metallic material and wherein the knife holder (8, 9) is glued to the base body (4) by means of the adhesive or sealant (10).

2. The cutting unit (2, 2') according to claim 1, **characterized in that** the adhesive or sealant (10) is an epoxy resin adhesive.

3. The cutting unit (2, 2') according to claim 1 or 2, **characterized in that** the stripping knife (5, 15; 6, 16) is secured to the knife holder (8, 9) via a detachable connection.

4. The cutting unit (2, 2') according to claim 3, **characterized in that** the stripping knife (5, 15; 6, 16) is screwed to the knife holder (8, 9).

5. The cutting unit (2, 2') according to any one of claims 1 to 4, **characterized in that** the base body (4) has a recess (11) for receiving the knife holder (8, 9).

6. The cutting unit (2, 2') according to claim 5, **characterized in that** the recess (11) for receiving the knife holder (8, 9) has a pocket-shaped configuration.

7. The cutting unit (2, 2') according to any one of claims 1 to 6, **characterized in that** the cutting unit has front and rear stripping knives (5, 15; 6, 16) for stripping a trailing and a leading cable end, and a cutting knife (7) arranged between the front and rear stripping knives (5, 15; 6, 16), wherein the front and rear stripping knives (5, 15; 6, 16) are arranged on opposite outer sides of the base body (4), and the cutting knife (7) is arranged centrally on the base body (4).

8. The cutting unit (2, 2') according to any one of claims 1 to 7, **characterized in that** the cutting unit (2, 2') has electrical connections (17, 18) for reading out electrical signals for detecting conductor contacts.

9. The cutting unit (2, 2') according to any one of claims 1 to 8, **characterized in that** the cutting unit (2, 2') has a printed circuit board (14) that is electrically connected to the knife holder (8, 9).

10. A stripping station (1) for stripping cables with a knife head () with an upper cutting unit (2) and a lower cutting unit (2'), wherein at least one of, and preferably the upper and lower cutting units (2, 2') is or are configured according to any one of claims 1 to 9, and with a monitoring arrangement (20) for detecting conductor contacts with inductive or capacitive operating mode.

11. A method for producing a cutting unit (2, 2') for a stripping station (1) for stripping cables, in particular for producing a cutting unit (2, 2') according to any one of claims 1 to 9, **characterized in that** at least one stripping knife (5, 15; 6, 16) is connected, directly or via a metallic knife holder (8, 9) for holding the stripping knife (5, 15; 6, 16), to a metallic base body (4) by means of glueing for creating an electrical separation.

12. The method according to claim 11, **characterized in that** for holding the stripping knife (5, 15; 6, 16), knife holders (8, 9) are manufactured with oversize, one or more knife holders (8, 9) are glued on the base body (4), and the knife holder or holders (8, 9) is/are manufactured to the desired dimension after the glueing process.

13. The method according to claim 12, **characterized in that** two base bodies (4) each having knife holders (8, 9) glued thereon are provided for forming a pair of cutting units from the upper cutting unit (2) and lower cutting unit (2'), and the two knife holders (8, 9) of the two base bodies (4) are brought to the desired dimension in a common manufacturing step.

## Revendications

1. Unité de coupe (2, 2') pour dénuder des câbles dans une station de dénudage (1), l'unité de coupe (2, 2') comprenant :
- un corps de base (4) composé d'un matériau métallique,
- au moins une lame de dénudage (5, 15 ; 6, 16),
- un porte-lame (8, 9), fixé ou apte à être fixé au corps de base (4), pour tenir la ou les lames de dénudage (5, 15 ; 6, 16),
**caractérisée en ce que** la lame de dénudage (5, 15 ; 6, 16) est séparée électriquement du corps de base (4) par une colle ou une matière d'étanchéité (10), le porte-lame (8, 9) se composant d'un matériau métallique, et le porte-lame (8, 9) étant collé au corps de base (4) à l'aide de la colle ou de la matière d'étanchéité (10).

2. Unité de coupe (2, 2') selon la revendication 1, **caractérisée en ce que** la colle ou la matière d'étanchéité (10) est une colle en résine époxy.

3. Unité de coupe (2, 2') selon la revendication 1 ou 2, **caractérisée en ce que** la lame de dénudage (5, 15 ; 6, 16) est fixée au porte-lame (8, 9) par l'intermédiaire d'une liaison amovible.

4. Unité de coupe (2, 2') selon la revendication 3, **caractérisée en ce que** la lame de dénudage (5, 15 ; 6, 16) est vissée au porte-lame (8, 9).

5. Unité de coupe (2, 2') selon l'une des revendications 1 à 4, **caractérisée en ce que** le corps de base (4) présente un évidement (11) pour recevoir le porte-lame (8, 9).

6. Unité de coupe (2, 2') selon la revendication 5, **caractérisée en ce que** l'évidement du porte-lame (8, 9) a la forme d'une poche.

7. Unité de coupe (2, 2') selon l'une des revendications 1 à 6, **caractérisée en ce que** l'unité de coupe comporte des lames de dénudage avant et arrière (5, 15 ; 6, 16) pour dénuder des extrémités de câble avant et arrière, dans le sens de transport, ainsi qu'une lame de séparation (7) disposée entre les lames de dénudage avant et arrière (5, 15 ; 6, 16), lesdites lames de dénudage avant et arrière (5, 15 ; 6, 16) étant disposées sur les côtés extérieurs opposés du corps de base (4) tandis que la lame de séparation (7) est disposée au centre du corps de base (4).

8. Unité de coupe (2, 2') selon l'une des revendications 1 à 7, **caractérisée en ce que** l'unité de coupe (2, 2') comporte des raccordements électriques (17, 18) pour la lecture de signaux électriques afin de déterminer des contacts de conducteurs.

9. Unité de coupe (2, 2') selon l'une des revendications 1 à 8, **caractérisée en ce que** l'unité de coupe comporte une carte imprimée (14) qui est reliée électriquement au porte-lame (8, 9).

10. Station de dénudage (1) pour dénuder des câbles, avec une tête à lames (3) pourvue d'une unité de coupe supérieure (2) et d'une unité de coupe inférieure (2'), au moins l'une d'elles et de préférence les unités de coupe supérieure et inférieure (2, 2') étant conçues selon l'une des revendications 1 à 9, et avec un dispositif de surveillance (20) pour constater des contacts de conducteurs à fonctionnement inductif ou capacitif.

11. Procédé pour fabriquer une unité de coupe (2, 2') pour une station de dénudage (1) pour dénuder des câbles, en particulier pour fabriquer une unité de coupe (2, 2') selon l'une des revendications 1 à 9, **caractérisé en ce qu'**au moins une lame de dénudage (5, 15 ; 6, 16) est reliée, directement ou par l'intermédiaire d'un porte-lame métallique (8, 9) destiné à tenir ladite lame de dénudage (5, 15 ; 6, 16), à un corps de base métallique par collage afin de créer une séparation électrique.

12. Procédé selon la revendication 11, **caractérisé en ce que** pour tenir la lame de dénudage (5, 15 ; 6, 16), des porte-lame (8, 9) sont fabriqués avec un surdimensionnement, un ou plusieurs porte-lame (8, 9) sont collés au corps de base (4), et après le collage le ou les porte-lame (8, 9) sont fabriqués à la mesure voulue.

13. Procédé selon la revendication 12, **caractérisé en ce que** pour former une paire d'unités de coupe formée d'une unité de coupe supérieure (2) et d'une unité de coupe inférieure (2'), deux corps de base (4) sont préparés avec des porte-lame (8, 9) collés sur chacun d'eux, et les porte-lame (8, 9) des deux corps de base (4) sont amenés à la bonne dimension lors d'une étape de fabrication commune.
